# EUROPEAN PATENT APPLICATION

(11) **EP 1 933 131 A1**
(43) Date of publication of application: **18.06.2008**
(21) Application number: 06125773.9
(22) Date of filing: 11.12.2006
(51) Int. Cl.: G01N 21/64, G02B 21/00

(54) **Efficient method and system for detecting luminescence**

(71) Applicant: Koninklijke Philips Electronics N.V., 5621 BA Eindhoven (NL)
(72) Inventor: Marius I, Boamfa Philips Intel. Property & Standards, 5656 AE Eindhoven (NL); Erik M. H.P Van Dijk Philips Intel. Property & Standards, 5656 AE Eindhoven (NL); Reinhold, Wimberger-Friedl Philips Intel. Property & Standards, 5656 AE Eindhoven (NL); Marcello L.M. Balistreri Philips Intel. Property & Standards, 5656 AE Eindhoven (NL)
(74) Representative: van Wermeskerken, Stephanie Christine

(57) **Abstract**

A detection system (100) is described for detecting light emitting sites in a sample (106). Such light emitting sites may be occupied binding sites typically comprising capturing probes occupied with a target particle, labelled with an optically variable particle, e.g. luminescent label. The detection system (100) typically comprises an excitation unit (102) adapted for scanning a sample (106) with an excitation beam having an excitation field comprising at least a first at least piecewise elongated excitation field component and a detection unit (104) adapted for detecting a luminescence response from spatially distinctive locations in the first at least piecewise elongated excitation field component on the sample (106). The excitation unit (102) and the detection unit (104) use a common refractive element (110) for accommodating the excitation beam and focussing it on the sample (106) and for detecting the luminescence responses from the sample (106) in the detection unit (104).

## Description

### FIELD OF THE INVENTION

The present invention relates to methods and systems for qualitative and/or quantitative luminescence detection systems, especially of light emissions from a sample. More particularly, the present invention relates to methods and systems for luminescence detection e.g. for detection of occupied binding sites in a sample that contains at least one optically variable particle.

### BACKGROUND OF THE INVENTION

In general, molecular diagnostics of a bio-sample, usually a liquid analyte mixture, typically comprises screening of the bio-sample for detection of certain biological components, referred to as target particles, such as genes or proteins. This is done by first allowing selective bindings to be formed between target particles and capture probes that typically are attached to a solid surface. Such selective binding is also known as hybridisation. The hybridisation step then typically is followed by a washing step, where all unbounded target particles are flushed away. Finally a detection step is performed for detecting the presence of target particles captured by the capture probes. Taking into account the probability for capturing the target particle to the capture probe, a quantitative analysis of the concentration of target particles present in the bio-sample can be determined. The detection step typically is based on detection of fluorescent labels attached to the target molecules. In order to cope with the small concentration of target molecules typically present in the bio-samples, it is very important that the fluorescent detection is very sensitive, ideally close to the ultimate detection limit of single fluorescent label sensitivity. To reach this high sensitivity, typically the detection step is time consuming.

At present in the field of molecular diagnostic the fluorescence detection is addressed by two different methods. In a first method, excitation is performed with a tightly focused beam that is scanned over the sample surface, while the fluorescence of the excited molecules is detected with the help of a single detector, usually with single photon detection capabilities, such as a photon tube multiplier, an avalanche photo-detector or a hybrid detector. In a second method, a large area of the sample is excited with the help of a large excitation beam and the fluorescence collected from this area is imaged on a 2D-pixelated detector, for example a CCD camera. In this scheme there is no scanning involved. In case of large samples, the imaging process is repeated until the whole area of interest is covered. The two methods reach similar performances in detection limits and detection time.

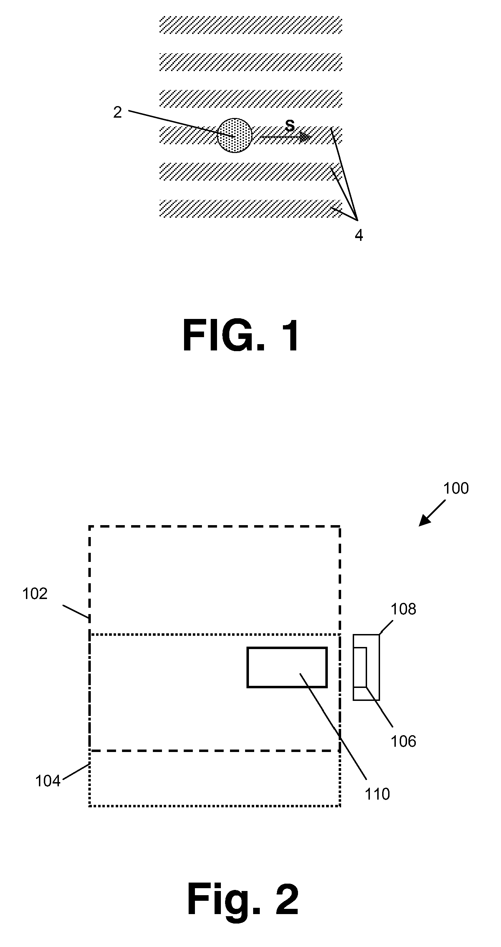

European Patent Application EP04104834.9 discloses a fluorescence detection system using a single excitation spot which is scanned over the surface and a detection system allowing to substantially instantaneous detect the emission of the excited spot. The excitation field thereby is selected to excite an area that typically comprises not more than one fluorescence label at a time. Fig. 1 illustrates the excitation field 2 of the excitation beam on the sample and different tracks 4 of the sample to be scanned. Furthermore the scanning direction S for the track currently scanned is indicated. The system has the disadvantage of being slow as compared to other prior art detection systems.

### SUMMARY OF THE INVENTION

It is an object of the present invention to provide efficient methods and systems for detection and/or quantification of light emissions on samples, e.g. light emitted from target particles labelled with optically variable particles or molecules. It is an advantage of embodiments of the present invention that a high throughput of samples or a short overall detection time is obtained. It furthermore is an advantage of device embodiments of the present invention that the number of parts needed is limited. It also is an advantage of device embodiments of the present invention that these can be based or can be build similar to known optical storage pick-up systems such as compact disc device or digital video device writers/recorders. It is an advantage of embodiments of the present invention that a high sensitivity can be reached, i.e. up to single fluorescent label sensitivity. It is an advantage of embodiments of the present invention that a high degree of reliability is obtained.

The above objective is accomplished by a method and device according to the present invention.

The present invention relates to a detection system for detecting light emission sites in a sample, the detection system comprising an excitation unit adapted for scanning a sample with an excitation beam, the excitation beam forming an excitation field for scanning the sample, the excitation field having at least a first at least piecewise elongated excitation field component on the sample. The detection system also comprises a detection unit adapted for spatially detecting a luminescence response from different locations within the at least a first at least piecewise elongated excitation field component on the sample. The excitation unit and the detection unit use a common refractive element for focussing the excitation beam on the sample and for collecting the luminescence response and guide it to the detection unit. The at least a first at least piecewise elongated excitation field component may be a first at least piecewise elongated excitation field component. The first at least piecewise elongated excitation field component may be a spatially continuous or a discontinuous excitation field component. In other words, an at least piecewise elongated region may correspond with a single continuous elongate region or with a number of regions located with respect to each other such that they are spread over a substantially elongate region, while sub-regions located substantially throughout the whole elongate region are excited. With substantially throughout the whole elongated region there may be meant that representative excitation points in at least 50%, preferably at least 70%, more preferably at least 90% of the whole elongated region are present. With at least piecewise elongated excitation field component, there may be meant that the total excitation field component excites a region or substantial parts thereof that is substantially elongated in one direction. It is an advantage of embodiments of the present invention that an efficient and highly sensitive detection system is obtained. It also is an advantage that a substantially high excitation power can be used. It furthermore is an advantage of the present embodiment that large areas can be scanned, without positioning problems of the excitation beam. The latter results in a good image quality e.g. substantially without blurring of the image.

The detection system further may comprise means for generating the excitation field having the at least a first at least piecewise elongated excitation field component, the means for generating the excitation field generating a row of excitation spots in the first at least piecewise elongated excitation field component of the excitation beam. It is an advantage of specific embodiments of the present invention that a number of tracks may be scanned at the same time, thus resulting in a higher efficiency. It is also an advantage of multi-spot excitation embodiments of the present invention that little stray light is present in each of the spatially distinctive different detection location of the excitation field. It is furthermore an advantage of multi-spot excitation embodiments of the present invention that they allow obtaining a 2-dimensional confocal detection system, i.e. in each direction in the cross-section of the excitation beam. The excitation spots may be discrete and/or distinctive excitation spots.

All spots of the row of excitation spots may be focused on the sample using the common refractive element. It is an advantage of particular embodiments of the present invention that a standard lens may be used, such as for example a standard lens as present in a standard optical storage pick-up device, without the need for providing other and/or more complicated optical elements for focussing an array of discrete spots.

The means for generating a row of excitation spots in the first at least piecewise elongated excitation field component of the excitation beam is any of a phase plate or a diffraction grating.

The means for generating a row of excitation spots in the first at least piecewise elongated excitation field component may be adapted for selecting an orientation of the row of excitation spots with respect to a scanning direction of the excitation beam. It is an advantage of particular embodiments of the present invention that the pitch between different tracks, determined by the scanning spots, can be selected by orienting the row of excitation spots with respect to a scanning direction of the excitation beam.

The means for generating an excitation field comprising at least a first at least piecewise elongated excitation field component may comprise a means for generating a line-shaped first elongated excitation field component. It is an advantage of embodiments having a line-shaped elongated excitation field according to the present invention that a complete area may be studied by moving an excitation beam in one direction.

The means for generating a line-shaped first elongated excitation field component may comprise any of a phase plate or a cylindrical lens.

The detection system furthermore may comprise an evaluation unit that is adapted for memorising locations with a specific luminescence response as candidates for an occupied binding site and to classify such a candidate as a detected occupied binding site if it shows a predetermined response behaviour in two or more scans. It is an advantage of embodiments of the present invention that these combine high accuracy with high efficiency. The specific luminescence response may be a target specific luminescence response.

The means for generating an excitation field comprising at least a first at least piecewise elongated excitation field component may comprise a means for generating a plurality of substantially spaced and substantially parallel at least piecewise elongated excitation field components. It is an advantage of particular embodiments of the present invention that these may allow performing a first measurement and a control measurement during the same scan. The latter allows to increase the accuracy and efficiency of the system.

The present invention also relates to a method for detecting light emission sites in a sample, the method comprising scanning a sample by focussing an excitation beam having an excitation field comprising at least a first at least piecewise elongated excitation field component through a refractive element on the sample, receiving through the refractive element a luminescent signal from the sample and detecting spatially distinctive luminescence responses from different locations in the first at least piecewise elongated excitation field component on the sample based on the received luminescent signal. It is an advantage of embodiments of the present invention that these combine high accuracy with high efficiency. The specific luminescence response may be a target specific luminescence response.

The first at least piecewise elongated excitation field component may comprise a row of excitation spots, wherein method furthermore may comprise prior to the scanning of a sample, adapting an orientation of the row of excitation spots with respect to the scanning direction to match a position of the excitation spots with a position of tracks to be scanned on the sample.

The method furthermore may comprise, after the detecting spatially distinctive luminescence responses, memorising locations with a specific luminescence response as candidates for an occupied binding site, repeating at least once the scanning, receiving, detecting and memorising and classifying a candidate for an occupied binding site as detected occupied binding site if it shows a predetermined response behaviour in two or more scans. It is an advantage of particular embodiments of the present invention that a high reliability is obtained.

The excitation beam may comprise at least one further at least piecewise elongated excitation field component substantially parallel to and substantially spaced from the first at least piecewise elongated excitation field component, wherein the scanning may comprise focussing the excitation beam comprising the first and the at least one further at least piecewise elongated excitation field components through a refractive element on the sample, the method furthermore comprising, receiving through the refractive element a luminescent signal from the sample and detecting spatially distinctive luminescence responses from different locations in the further at least piecewise elongated excitation field component on the sample based on the received luminescent signal.

Particular and preferred aspects of the invention are set out in the accompanying independent and dependent claims. Features from the dependent claims may be combined with features of the independent claims and with features of other dependent claims as appropriate and not merely as explicitly set out in the claims.

The teachings of the present invention permit the design of improved methods and apparatus for detecting target particles in molecular diagnostics.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### BRIEF DESCRIPTION OF THE DRAWINGS

Fig. 1 illustrates the excitation field on a sample for a single spot excitation in a digital detection system for target particles labelled with luminescent labels according to prior art.
Fig. 2 is a schematic overview of the main components of a detection system for target particles labelled with luminescent labels according to the first aspect of the present invention.
Fig. 3 is a more detailed schematic overview of the components of a detection system for target particles labelled with luminescent labels according to the first aspect of the present invention.
Fig. 4 illustrates the excitation field on a sample for a multi-spot excitation in a detection system for target particles labelled with luminescent labels according to the first embodiment of the first aspect of the present invention.
Fig. 5 illustrates the excitation field on a sample for a rotated multi-spot excitation in a detection system for target particles labelled with luminescent labels according to the second embodiment of the first aspect of the present invention.
Fig. 6 illustrates the excitation field on a sample for a line-shaped excitation in a detection system for target particles labelled with luminescent labels according to the third embodiment of the first aspect of the present invention.
Fig. 7 illustrates two elongated excitation field components on a sample for a double multi-spot excitation in a detection system for target particles labelled with luminescent labels according to the fourth embodiment of the first aspect of the present invention
Fig. 8 shows a schematic overview of necessary and optional steps of a method for detecting target particles labelled with luminescent labels according to the second aspect of the present invention.

In the different figures, the same reference signs refer to the same or analogous elements.

### DETAILED DESCRIPTION OF THE EMBODIMENTS

The following terms or definitions are provided solely to aid in the understanding of the invention. These definitions should not be construed to have a scope less than understood by a person of ordinary skill in the art. An occupied binding site by definition means that the binding site contains at least one optically variable particle. A binding site may just be a certain location in the sample where binding may occur. Binding may be the presence of an optically variable particle at that location. With target particles, any material object of interest is referred to such as for example atoms, ions, molecules, complexes or biological systems like cells or microbial organisms.

The present invention will be described with respect to particular embodiments and with reference to certain drawings but the invention is not limited thereto but only by the claims. Any reference signs in the claims shall not be construed as limiting the scope. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The different embodiments and aspects of the present invention relate to the detection of light emission. The light emission usually relates to emission upon excitation with an excitation beam, although the present invention is not limited thereto. The excitation beam comprises electromagnetic radiation in the optical, infrared, far infrared, ultraviolet or far ultraviolet wavelength ranges. The light emission sites may relate to occupied sites occupied by e.g. luminescent labelled target particles. Nevertheless, the methods and systems for detecting light emission sites also may relate to detection of all kinds of sites emitting light, i.e. not necessarily related to bio-particles but also to other light emitting sources, such as e.g. electronic or micro-electronic light sources. Furthermore, light emission sites also may relate to chemical or structural features of a device, sample or surface leading to generation of light emission, e.g. when illuminated. By way of illustration, detection of light emission sites obtained from luminescent labels generated in a sample, e.g. for molecular diagnostics applications are described, however the present invention is not limited thereto. The sample typically may be a fluid such as a liquid or gas. The sample typically may be an analyte mixture. By luminescence is meant emission of electromagnetic radiation in the optical, infrared, far infrared, ultraviolet or far ultraviolet wavelength ranges. The sample may be provided on or to a substrate comprising capture elements, for capturing different particles from the sample. Where reference is made to the sample, the sample, the substrate being in contact with the analyte mixture or the substrate having been in contact with the analyte mixture may be referred to. The substrate may be a flat plate of any suitable material, e.g. may be of glass or a polymer, and may have e.g. capture elements with a surface density between 0.01 and 10⁶ elements per µm², preferably between 10 and 10⁴ elements per µm². The sample, the substrate with capture elements in contact with the sample or the substrate after it has been in contact with the sample, typically is screened for certain components, e.g. biological components such as oligonucleotides, DNA, RNA, genes, proteins, carbohydrates, lipids, cells, cell components such as external cell membranes or internal cell membranes, bacteria, viruses, protozoa, etc. also called the target particles. Luminescent labels typically are attached to the target particles and thus assist in the detection of target particles. In some embodiments the sample thus includes at least one luminescent label, also referred to as "optically variable particle". Such optically variable particles can be, for instance, fluorescent, electroluminescent, chemoluminescent particles, etc. The optical variable particles may be any entity that is capable to bind to a binding site mechanically, electrically, chemically or otherwise. It may be single molecules or a plurality of molecules, preferably a collection of between 10 to 10⁸ molecules and/or quantum dot-like labels. If a plurality of molecules is used, typically a stronger response to the excitation is obtained, resulting in a better signal-to-noise ratio.

There are at least three possible situations for using optically variable particles in the labelling of a target particle:
1) Target particles are labelled with optically variable particles which emit light, e.g. which are fluorescent. For visualising or detecting, such target particles, if present, may e.g. be selectively bound to a capture probe which can be attached to a substrate, while all other optically variable particles and unbounded target particles are washed away. A bounding between a target particle and a capture probe also may be referred to as hybridisation. Luminescence thus is used as characteristic for the presence of target particles.
2) Target particles are labelled with optically variable particles which only emit light, e.g. are fluorescent, when they are bound to capture probes which can be attached to a substrate.. A washing step is in this case used to obtain stringency as lightly bound molecules will be washed away.
3) Optically variable particles attached to a substrate are luminescent, e.g. are fluorescent, when a target particle binds to them. A washing step is used to obtain stringency as lightly bound target particles are washed away.

Alternatively, a target particle to be detected can, upon irradiation with excitation radiation, e.g. excitation light, is luminescent, e.g. is fluorescent, itself. In that case, no labels are required and the target particle itself acts as the optically variable particle. The methods and systems of the present invention, suitable for detecting labelled target particles typically, may be based on any of the above described labelling techniques.

In a first aspect, the present invention relates to detection systems for detecting light emissions, e.g. luminescence responses indicating occupation of a binding site in a sample that contains at least one labelling element. By way of illustration, a schematic representation of such a system is shown in Fig. 2. The detection system 100 according to the first aspect of the present invention comprises an excitation unit 102 for generating an excitation beam and a detection unit 104 for detecting a luminescence response from a sample 106 to be studied. Whereas the sample 106 typically is not part of the detection system 100, the detection system 100 may comprise a sample holder 108 for holding the sample 106. Alternatively, the sample may also include a substrate with capturing elements, whereby the substrate with capturing elements may be part of the detection system 100 and which may be re-usable by washing parts of the analyte mixture studied previously away from the surface. The excitation unit 102 thereby is adapted for scanning a sample 106 with an excitation beam having an excitation field comprising at least a first at least piecewise elongated excitation field component, e.g. a substantially elongated excitation field or a substantially piecewise excitation field, on the sample 106. "At least piecewise" means that the elongated field can be made up of an illuminated line or lines, or of a row of spots, etc. The excitation field may be one elongated excitation field, in other words, only a single component having an elongated shape may be present. With an excitation beam having an excitation field comprising at least a first at least piecewise elongated excitation field component on the sample there is meant that the cross-section of the excitation beam as imaged onto the sample comprises at least one component with an at least piecewise elongated shape. The excitation field component may be continuous or discontinuous, e.g. piecewise or piecewise continuous, but the overall component shape is an elongated shape. Such an excitation beam may e.g. have a line-shape excitation field component on the sample 106 or an excitation field component having a multi-spot configuration, for example a row of excitation spots on the sample 106, e.g. a row of discrete excitation spots on the sample 106. For the scanning of a sample 106 it is possible to move the excitation 102 and detection unit 104 or part thereof with respect to a stationary sample 106, to move the sample 106 with respect to a stationary excitation 102 and detection unit 104, to move both the sample 106 and the excitation 102 and detection unit 104 or to guide the excitation beam across the sample 106 using moveable or rotatable optical elements.

The scanning direction in principle may be according to any or a combination of any direction in the 2-dimensional plane of the sample surface. Scanning preferably occurs along Cartesian coordinates, e.g. along line segments, e.g. finite line segments, or a combination of line segments, e.g. finite line segments, in a Cartesian coordinate system. Such scanning typically includes for example x-y scanning, raster scanning, x-y scanning along line segments, e.g. finite line segments, with stochastically chosen directions. Although not excluded from the present invention, it thus is less preferably to perform scanning in a relative rotational movement, as the latter typically results in the need for scanning very large areas.

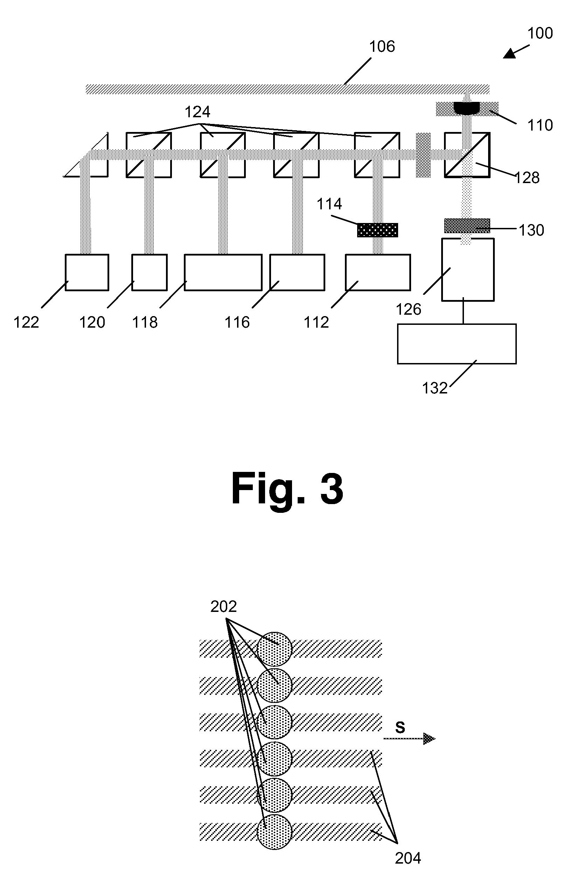

The detection unit 104 is adapted for spatially distinctively detecting one or more luminescence responses from different locations in an instantaneous stationary at least piecewise elongated excitation field component of the excitation field of the excitation beam on the sample 106. In other words, different light emission sites may be detected spatially distinctive.. The light emission sites may relate to all kinds of sites emitting light, such as e.g. luminescent labelled target particles, but also other light emitting sources such as e.g. electronic or micro-electronic light sources or chemical or structural features of a device, sample or surface leading to generation of light emission, e.g. when illuminated. The at least piecewise elongated excitation field component from the excitation beam present in the sample thus typically may be considered as comprising a plurality of spatially distinctive excitation areas for exciting light emission sites. Preferably the spatially distinctive excitation areas are such that nearly always maximally one light emission site, e.g. occupied binding site, is present within each of the spatially distinctive excitation areas. The detection unit 104 typically comprises a detector allowing detection of distinctive luminescence responses from different locations in the at least piecewise elongated excitation field component on the sample 106. The latter may e.g. be obtained using a pixelated detector or a line of single-pixel detector systems. In the present invention, the excitation unit 102 and the detection unit 104 use a common refractive element 110. The common refractive element 110 is used by the excitation unit 102 for focussing the excitation beam on the sample 106 and by the detection unit 104 for collecting the luminescence response(s) from the sample 106. The common refractive element 110 may be a single lens element or may be a combination of a multiple of lens elements. It is an advantage of embodiments of the present invention that they result in a compact detection system. It furthermore is an advantage of embodiments of the present invention that less components are needed. The excitation unit and detection unit will now be discussed in more detail with reference to Fig. 3.

The excitation unit 102 typically comprises a source of excitation radiation 112, e.g. a light source 112. The light source 112 thereby is adapted for emitting light at a predetermined wavelength or a predetermined wavelength range, suitable for exciting or illuminating the light emission sites, e.g. optically variable particles, present in the sample. For example, in the case where the generated luminescence radiation is fluorescence radiation, the optical wavelength of the excitation radiation typically may be e.g. in the range from 200nm to 2000nm, or e.g. in the range from 400nm to 1100nm, the invention not being limited thereto. The light source used may e.g. be a laser device. The excitation power present in the excitation field of the light beam preferably may be such that each spatially distinctive excitation area of the at least piecewise elongated excitation field component may comprise an excitation power such that about 10% to 90%, preferably about 30% to 80% of the saturation level of the luminescence is achieved.

The excitation unit furthermore comprises a means 114 for generating an excitation field comprising at least a first at least piecewise elongated excitation field component in the excitation beam. Such a means 114 may be for example a means for generating a single excitation field component comprising a row of excitation spots or a means for generating a line-shaped excitation spot, as will be discussed further in the exemplary embodiments below. The means 114 for generating an excitation field comprising at least a first at least piecewise elongated excitation field component may be adapted for generating a plurality of substantially spaced and substantially parallel excitation field components, whereby each of the excitation field components may be line-shaped or comprise a row of multi-spots.

The excitation unit furthermore optionally may comprise a focus controlling means 116, e.g. a focussing servo system, and a tracking controlling means 118, e.g. a tracking servo system, for controlling the focussing of the excitation beam and for controlling the position of the excitation beam e.g. on specific tracks. The focus controlling means may be based on different focusing methods, such as for example, but not limited to Foucault wedge focusing. A tracking controlling means 118 typically may be used for controlling tracking, which is needed for obtaining accurate spatial detection. The excitation unit furthermore may comprise high frequency controlling means 120 and an auxiliary detector 122 such as e.g. a charge coupled device (CCD), which may be used for optimising the tracking and focusing functions.

The excitation unit furthermore may comprise, besides the common refractive element 110 which is the objective element used for focussing the excitation beam on the sample, other optical elements 124 such as e.g. a beam splitter, e.g. a polarisation selective beam splitter, for directing light from the source of excitation radiation 112 towards the sample and/or beam splitters, mirrors for directing light between the different components and the sample or lenses for a further lens element for collimating the excitation beam to a parallel excitation beam.

As described above, the detection unit comprises a detector 126, such as a photo detector for detecting distinctive luminescence responses from different locations in the sample within the first at least piecewise elongated excitation field component. The latter may be a pixelated detector or a line of multiple single-pixel detectors. Such a detector 126 may e.g. be a charge coupled device (CCD) detector, a row of photon tube multipliers, a row of avalanche photodiodes, etc. Typically the detector may be a row-detector (n x 1 pixels) or a 2-dimensional detector (n x m pixels). The width of the detector typically is such that the number of pixels (n) is at least sufficiently large to spatially distinctively detect different areas of the at least piecewise elongated excitation field component. These different areas thereby are such that approximately always maximally one occupied binding site is present within the area detected by a single pixel during examination. A typical area detected by a single pixel may be sized between 0.01µm² and 100µm², preferably between 0.1µm² and 25µm², such as e.g. 1µm².

The detection unit typically furthermore may comprise a dichroic filter or a dichroic beam splitter 128 for blocking unwanted excitation radiation to be incident on the pixelated detector 126 . The dichroic filter or beam splitter suppresses the reflected excitation radiation that is directed to the pixelated detector and does not substantially suppress the luminescence response coming from the sample and directed to the pixelated detector. In case a dichroic beam splitter is used, the excitation radiation is directed out of the light path between the sample and the pixelated detector. The transmissivity for wavelengths of the luminescence response radiation preferably is larger than 10%, more preferably larger than 30%, even more preferably larger than 50%. The detection unit furthermore also may comprise other optical elements 130 such as filters, and additional lenses for optimising guidance of the appropriate luminescence signals to the pixelated detector 126. Alternatively or in combination thereto, in a particular embodiment, the system also may be operated in a pulsed regime, whereby excitation occurs by quickly switching the light source 112 to the ON state, whereas it is turned OFF to allow measuring the light response from the light emission sites, e.g. to allow measuring the luminescence response from the light emission sites. When the detector unit is adapted for detecting only when the light source 112 is in the OFF state, no dichroic filter or dichroic beam splitter 128 is needed. A control means for controlling the switching of the light source 112 and the detection unit 104 may be provided.

In a particular embodiment, the detection system 100 furthermore may comprise an evaluation unit 132. The evaluation unit 132 typically may allow determination of the presence of, a concentration of or the distribution of light emission sites, such as - but not limited to - e.g. the target particles present in the sample. The evaluation unit 132 also may be adapted for performing processing, e.g. statistical processing, of the obtained detection results. The evaluation unit 132 may be adapted to memorise the locations in the sample where a luminescence response was detected for different scans. If the luminescence response is detected on that location in at least one subsequent scan or a previous scan, the location typically may be classified as comprising a light emission site, e.g. a target particle. The latter allows to increase the quality of the detection, e.g. it allows to avoid disturbing effects from non static light emission sites, e.g. lightly bounded luminescence particles. It thus increases the certainty of the measurement. Moreover, if the scans are repeated a plurality of times, the evaluation unit also may allow studying dynamics of the light emission sites, e.g. binding dynamics, which provides additional information such as e.g. the lifetime of bound sites in a molecular diagnostic test. Typically an evaluation unit 130 may comprise a processing means, such as e.g. a microprocessor, for processing the evaluation information and a memory component for storing the obtained and/or processed evaluation information. Furthermore typical input/output means may be present. The evaluation unit may be controlled using appropriate software or dedicated hardware processing means for executing the evaluation steps.

In preferred embodiments, the detection system may be derived from an optical storage system such as a compact disc player/writer, a digital video disc player/writer or similar apparatus. The latter results in a cost effective system, for economical cost as well as for time-related and effort-related cost. The above described components thus typically may be the same as in an optical pick-up system of a compact disc player/writer, a digital video disc player/writer or similar apparatus. The latter is not only valid for e.g. the source of excitation radiation, the tracking controlling means and the focussing controlling means but also for the optical elements such as the objective lens, present in the detection system.

The system furthermore may comprise or may be used with a substrate resembling a compact disc, a digital video disc or the like, allowing to localise positions in the sample with high spatial resolution and reproducibility, i.e. comprising for example grooves and wobble for position tracking and auto-focussing of the beam. The grooves typically may be adapted such that these are transparent for the excitation and luminescence radiation and such that they are optimised in depth for focus and tracking signals. Such a sample typically preferably may be credit card format shaped rather than disc shaped, although the invention is not limited thereto.

The first aspect of the present invention will now be illustrated by a number of particular embodiments, the invention not being limited thereto.

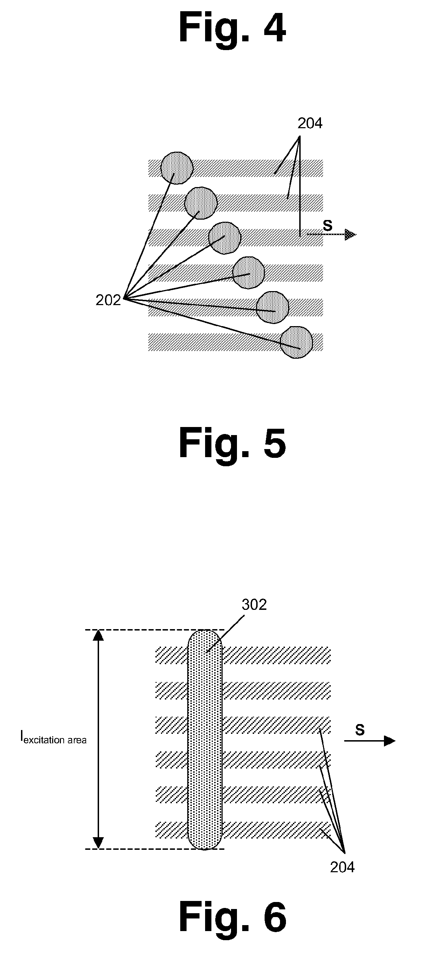

In a first particular embodiment, a system according to the first aspect of the present invention is described, whereby the means 114 for generating an excitation field with at least a first at least piecewise elongated excitation field component from the excitation beam on the sample 106 is adapted for generating an excitation beam having a row of excitation spots as first excitation field component. The row of excitation spots may be a row of discrete excitation spots or a row of distinctive, possibly overlapping, excitation spots. In other words, in the first particular embodiment, the means 114 for generating an excitation field comprising at least a first at least piecewise elongated excitation field component is a means for generating a row of excitation spots. Such an excitation field component may e.g. be obtained by the use of a phase plate or a diffraction grating in the path of the excitation beam. The effect of such an element is that an initial excitation beam is degenerated in a row of multiple excitation spots. An example of (part of) a row of multiple excitation spots that may be obtained is illustrated in Fig. 4. Typically, the row of multiple excitation spots 202 is contained within the focal plane of the common refractive element 110, e.g. common lens element and thus is imaged onto the sample. The row of multiple excitation spots 202 may be oriented perpendicular to the direction of the relative scanning direction, indicated by arrow S, or may be tilted with respect to the direction of the relative scanning direction S. The number of spots 202 that may be provided depends on the spot size that is to be obtained, the optics that are used, e.g. the numerical aperture of the objective lens or common refractive element 110, e.g. common lens element, used for imaging the spots 202 on the sample, and on the amount of aberration that is allowed for the different spots 202. In order to illustrate the latter, reference will be made to a typical objective lens, i.e. common lens element 110, as present in a typical DVD system. In today's applications, such a lens typically has a numerical aperture of about 0.65 and has a focal distance of about 2.75mm. If e.g. a wave front aberration of 50mλ would be allowed, the light beams forming the spots at the edge of the excitation field may have an off axis angle of about 0.7°. The latter results, in combination with the focal distance of 2.75mm, in a spread up to about 50µm at each side of the optical axis of the lens. The maximum number of spots that may be generated is determined by the diffraction limit allowing to distinguish the separate spots. For diffraction limited spots, having a full width at half maximum in the range of 0.7µm, about 70 spots can fit in the optimal field of the lens. Nevertheless, the invention is not limited thereto and more spots, e.g. located further away from the optical axis, also may be used. If more aberration is allowed, the number of spots that can be generated can be larger. Alternatively, if a larger spot size is used, the number of spots fitting into the optimal field of the lens will be smaller. Typically between 2 and 100 spots may be used, e.g. between 5 and 70 spots. The typical excitation power flux needed for bringing the luminescence of typical labels in saturation is about 1mW/µm². Typically the power of the source of excitation radiation 112 is large enough such that if it is divided over a plurality of spots, the excitation efficiency for bringing luminescence labels into saturation is reached for each spot. In order to illustrate the latter, reference will be made to a typical light source 112 as present in a typical DVD system. In today's applications, such a light source typically may be a diode laser emitting around 650nm and having a power in excess of 200mW. Distributing this power over a number of spots up to 100 thus would result in a power per spot that still is in the optimal range for saturating luminescence excitation.

It is an advantage of the present embodiment that the different spots generating the elongated excitation field component, in the present case a discontinuous, elongated excitation field component, are confined in two directions in the plane of the excitation field on the sample. The latter allows obtaining 2-dimensional confocal detection results. The latter also allows to reduce stray light which might occur from excitation in the immediate neighbouring of the excitation spots.

It is an advantage of the present embodiment that several tracks can be scanned and studied at the same time. The latter may especially be efficient in case a sample holder or substrate comprising grooves is used and in an embodiment whereby a tracking system is used for positioning the excitation beam. In such an embodiment, the grooves may have a pitch such that each spot 202 corresponds with a specific track 204 on the sample holder or substrate. In this way accurate positioning of the different beam spots can be checked.

It is an advantage of the present embodiment that an increased number n of optical spots allows to increase the integration time per spot by decreasing the relative scanning speed of the excitation beam with respect to the sample while the total scanning time remains constant. An integration time increased with a factor n or a scanning time reduction with a factor 1/n can be obtained. Furthermore also a partial scanning speed reduction and a partial integration time increase or a partial decrease of the total scanning time may be achieved.

A second particular embodiment relates to a detection system as described in the first embodiment, comprising the same components and features and having substantially the same advantages as the first embodiment, but wherein furthermore, the means for generating a row of excitation spots is rotatable, i.e. is adapted for rotating the row of excitation spots 202 with respect to the scanning direction S of the excitation beam relative to the sample. By using a rotatable means for generating a row of excitation spots, the orientation of the multi-spot row can be varied, as is illustrated in Fig. 5, indicating the rotated row of excitation spots 202 and the scanning direction S. The advantage of this rotation is that using the same grating/phase plate the effective distance between the spots, determined orthogonal to the scanning direction, can be varied. The latter may for example be used to accommodate for different track pitches for the different tracks 204 studied simultaneously with the excitation beam. In the extreme case the spots 202 can effectively overlap. In this way, the complete area of interest can be scanned in one go. The orientation of the row of multi-spots 202 may be such that for example, for a device with tracks and grooves, the odd spots scan on the tracks and the even spots scan in the grooves.

In a third particular embodiment, the present invention relates to a detection system having the same advantages and the same features as in the above described detection system but wherein the means 114 for generating an excitation field comprising at least one at least piecewise elongated excitation field component is not a means for generating a row of excitation spots but a means for generating a line-shaped excitation field as first elongated excitation field component. Such means for generating a line-shaped excitation field may be a cylindrical lens or a phase plate used in the light path of the laser and generating a line shaped excitation area in the focal plane of the lens. An example of a line-shaped excitation area 302 is illustrated in Fig. 6. The length direction l_{excitation area} of the line shaped excitation field component typically is determined by the optics used, e.g. by the numerical aperture of the common lens element 110 and by the allowed aberration. The latter is illustrated by way of example for a typical lens present in a typical DVD system. In today's applications, such a lens typically has a numerical aperture of about 0.65 and has a focal distance of about 2.75mm. If e.g. a wave front aberration of 50mλ would be allowed, the light beams forming the spots at the edge of the excitation field may have an off axis angle of about 0.7°. The latter results, in combination with the focal distance of 2.75mm, in a spread up to about 50µm at each side of the optical axis of the lens, resulting in a 100µm long excitation line. The width in the direction orthogonal thereto has a minimal size determined by the diffraction limit, i.e. the full width at half maximum intensity of the excitation area may be down to 0.7 µm. The particular length of the excitation line may be determined by the phase profile of the phase plate or by the focal length of the cylindrical lens. The typical focusing methods as used in the above detection systems also may be applied to the present embodiment, but the tracking is to be readapted. The line-shaped excitation in combination with the pixelated detector of the detection unit also allows to obtain simultaneously information about different areas in the excitation field of the sample, thus leading to the possibility to obtain a shorter overall scanning time, an increased sensitivity due to a lower scanning speed or a combination thereof. The line-shaped excitation spot typically is confined in one direction, thus resulting in the possibility to obtain 1-dimensional confocal detection.

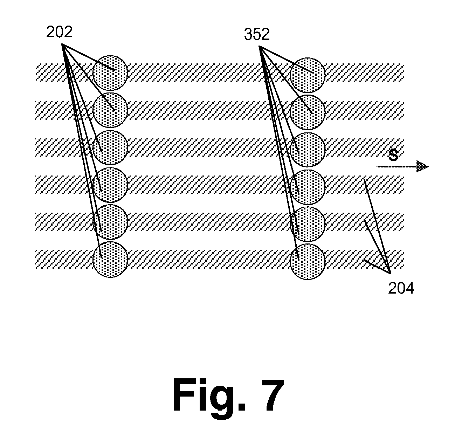

In a fourth particular embodiment, the present invention relates to a detection system having the same advantages and the same features as in the above described detection system but wherein the means 114 for generating an excitation field comprising at least a first at least piecewise elongated excitation field component is a means for generating at least two substantially spaced, substantially parallel at least piecewise elongate excitation field components. Each of the at least piecewise elongated excitation field components may be any of a row of excitation spots, e.g. discrete or, possibly partial overlapping, distinctive excitation spots, or a line shaped spot. In Fig. 7, an example is shown of an excitation field comprising two at least piecewise elongated excitation field components 202, 352, each consisting of a number of spots. The at least two at least piecewise elongated excitation field components typically may be at least substantially spaced in a direction being the same as the major scanning direction used in the detection system. In the present invention, typically both at least piecewise elongated excitation fields are accommodated in the same optics system, i.e. using the same final refractive element, i.e. for example the same objective lens. By using the detection system as described above with an at least second at least piecewise elongated excitation field component it is possible to use the first at least piecewise elongated excitation field component for a first attempt for detecting emission sites, e.g. luminescence labels, on the sample 106 and to use the second at least piecewise elongated excitation field component for a second attempt for detecting emission sites, e.g. luminescence labels, on the sample 106. The second attempt for detecting emission sites, e.g. luminescence labels, may e.g. be used for cross-checking the presence of the measured emission sites, e.g. luminescence labels, on the sample 106 measured during the first attempt, e.g. by correlating the obtained measurement results. The detection system of the present embodiment typically is adapted for distinctively detecting the distinctive luminescence responses from different locations in the first at least piecewise elongated excitation field component and from the distinctive luminescence responses from different locations in the at least a second at least piecewise elongated excitation field component. The latter may obtained with a pixelated detector whereby the distinctive responses from the first at least piecewise elongated excitation field component are detected using a first row of detector pixels and the distinctive responses from the at least one second at least piecewise elongated excitation field component are detected using at least one second row of detector pixels. Alternatively two distinct row detectors may be used or two rows of a single-pixel detectors may be used, each row detector or row of detectors detecting luminescence responses from one at least piecewise elongated excitation field component. The spacing between the at least two parallel at least piecewise elongated excitation field components should preferably be such that in combination with the scanning speed and the luminescent labels used, the typical time between study of a specific location in the sample using the first at least piecewise elongated excitation field component and using the at least second at least piecewise elongated excitation field component is sufficiently longer than the luminescent decay time of the light emission sites, e.g. luminescent labels, used. In case labelled molecules are detected, the typical time between study of different excitation field components preferably is also sufficiently longer than the typical lifetime of non-specific bindings. In this way, in a single scan movement, both a measurement and a control measurement may be performed and may allow avoiding erroneous detections of light emission sites, e.g. of bound target particles by misinterpreting luminescence stemming from non-specific bindings or occasional non-bounded luminescence labels. It is an advantage of such an embodiment that correlation between different luminescence excitation/detection measurements of the same sample area can be done more easily as they can be performed during the same scan. It also allows improvement of the positional accuracy of different luminescence excitation/detection measurements of the same sample area. It is also an advantage that significantly less time is needed for performing both a first measurement and at least one control measurement, as these all may be performed in a single scan.

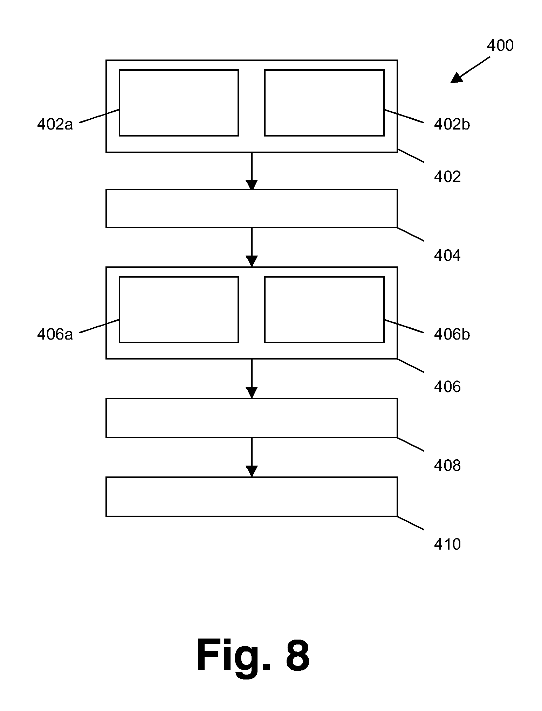

In a second aspect, the present invention relates to a method for detecting light emission sites, e.g. luminescence indicating occupation of a binding site, in a sample that contains at least one light emission site, e.g. labelling element. The light emission sites may relate to occupied sites occupied by e.g. luminescent labelled target particles, but also to detection of all kinds of sites emitting light, such as e.g. electronic or micro-electronic light sources, chemical or structural features of a device, sample or surface leading to generation of light emission, e.g. when illuminated. The method comprises scanning a sample by guiding an excitation beam with an excitation field comprising at least a first at least piecewise elongated excitation field component through an optical element on a sample and receiving through the same optical element a luminescent signal from the sample and detecting spatially distinctive local luminescence responses based on the received luminescent signal. The spatially distinctive luminescence responses may stem from an instantaneous at least piecewise elongated excitation field component. In other words, the spatially distinctive luminescence responses may be excited at the same time within an instantaneous at least piecewise elongated excitation field component. By way of example a more detailed description of standard and optional steps of an exemplary method 400 for detecting according to the second aspect is illustrated in Fig. 8.

In a first step 402, examining of a sample is performed. The sample typically comprises at least one light emission site. Such a light emission site may be any kind of site emitting light, such as e.g. electronic or micro-electronic light sources, chemical or structural features of a device, sample or surface leading to generation of light emission, e.g. when illuminated or a binding site labelled with a luminescent label. By way of illustration, the method will be described for bounded luminescent labels. In the latter case, prior to the examining of the sample, a contacting step between the analyte mixture to be analysed and a substrate comprising capturing probes may be provided as well as a washing step to remove lightly bounded elements. These steps are known from prior art, are specific for bounded luminescent labels and will not be discussed in detail further. The examining step comprises the scanning of the sample by guiding an excitation beam with an excitation field comprising at least a first at least piecewise excitation field component, such as e.g. an excitation field component being a row of excitation spots or a line-shaped excitation field component, through a focussing element on the sample, indicated by step 402a. Different light emitting sites, e.g. occupied binding sites, may be present within the currently examined spot area. The step furthermore comprises receiving, through the same focussing element from the sample a luminescence signal and deriving from that luminescence signal spatially distinctive luminescence responses for different areas in the excitation field component, indicated by step 402b. Such spatially distinctive luminescence responses may correspond with the luminescence responses of areas sized such that nearly always maximally one light emitting site, e.g. occupied binding site, is present. With nearly always there is meant in more than 90%, preferably more than 99% of the time. Such a spatially distinctive luminescence response may be either that no emission is present in the area, corresponding with no presence of a light emitting site, e.g. a labelled target molecule, or that emission arises from the area, corresponding with the area being single occupied, i.e. that a light emitting site, e.g. a labelled target molecule is present. For labelled target molecules in a molecular diagnostic test, such a condition is fulfilled irrespective of the scanning speed in the special case in which the effective spatial distinction of the luminescence responses is done with a spatial resolution smaller, e.g. by a factor of about 10⁻¹ to 10⁻⁵, than the mean distance between occupied binding sites in a sample. This corresponds to the situation of a sparse distribution of isolated occupied binding sites in which, apart from seldom exceptions, maximally one occupied binding site is spatially distinctively detected at a time. If the latter is not fulfilled, the scanning rate may be adapted to achieve the proposed condition. In general, scanning whereby in spatially distinctively detectable areas of the excitation spot maximally one light emission site, e.g. occupied binding site is present may be referred to as "digital", as there are only two possible outcomes for a spatially distinctive luminescence response, wherein either no luminescence is present or wherein luminescence is present stemming from a single light emission site, e.g. labelled target molecule. In a particular embodiment, wherein a row of excitation spots is focussed on the sample, for each spot, the luminescence response may be detected in one or more different pixels of the detector, these pixels only being used for luminescence stemming from that specific excitation spot. After the excitation step 402, the method may proceed to step 410, although it is preferred that steps 404, 406 and 408 are also performed.

In a second step 404, which may be optional and may be part of a process for increasing the reliability of the obtained results, memorisation of the presence of the light emission sites, e.g. occupied binding sites, determined in the examination of the previous step is performed, resulting in identification of candidates of light emitting sites, e.g. resulting in identification of candidates of presence of occupied binding sites. This information typically will be used in an evaluation step.

In a third step 406, which may be optional and may be part of a process for increasing the reliability of the obtained results, the sample is at least one time re-examined by again scanning the sample, indicated by step 406a, and again spatially distinctive detecting of local luminescence responses, indicated by step 406b. This step is similar, i.e. has the same features, as described in step 402. Between the first examinations step 402 and the second examination step 406, certain treatments, depending on the light emission sites to be detected may be performed. E.g. in case of detection of occupied binding sites, washing steps and/or temperature changes may be carried out for instance as stringency test to better discriminate between specific and non-specific binding.

In a fourth step 408, which may be optional and may be part of a process for increasing the reliability of the obtained results, memorisation of the presence of light emission sites, e.g. occupied binding sites, determined in the examination of the third step 406 is performed. Again this information may be used in an evaluation step, in combination with the information obtained in step 404.

It is to be noted that steps 406 and 408 may be performed during the same scan with a detection system using at least two at least piecewise elongated excitation field components in the excitation beam. Such a system is described in more detail in a fourth particular embodiment of the first aspect. The detection system typically also comprises an adapted detection unit. The latter has the advantage that correlating the measurements, as will be described in step 410 can be performed more easily due to more accurate positioning information.

A number of additional examination steps may be performed, whereby each time the results indicating which areas are candidates for comprising an occupied binding site are memorised.

In a fifth step 410, evaluation of the obtained spatially distinctive local luminescence responses is performed resulting in a quantitative or qualitative result, such as e.g. the presence of a light emission site, e.g. a specific target particle, the concentration of light emission sites, e.g. specific target particles, present in the sample or the distribution of light emission sites, e.g. specific target particles. The evaluation may be based on a single examination scan, but preferably is based on examination results obtained in a plurality of examination steps, such as e.g. steps 402 and 406, in order to increase the reliability of the measurement. In the latter case an evaluation is made about which area is to be classified as area with detected light emission site, e.g. occupied binding site. Such evaluation may be done by deciding that an area is to be classified as area with detected light emission sites, e.g. occupied binding site, as it shows the luminescence specific response in more than 90% of the different examination steps. The latter allows to determine those areas with a light emission site, e.g. an occupied binding site wherein a specific binding occurs, thus increasing the reliability of the measurements. E.g. in case labelled occupied binding sites are detected, it may avoid the influence of non-specific bindings or occasional non-bounded luminescent labels being present in the sample. Using different subsequent scans does not only allow increasing the reliability, it also allows to study the dynamics of the light emission sites.

In a particular embodiment, a method according to the second aspect of the present invention furthermore comprises, prior to the examination step 402, rotating the at least piecewise elongated excitation field component(s) with respect to the scanning direction, in order to match the position of different excitation spots used in the at least piecewise elongated excitation field with the position of tracks on the sample or substrate to be studied.

The above described method embodiments can be particularly advantageously used with the device embodiments described in the first aspect of the present invention.

It is an advantage of embodiments of the present invention that systems and/or methods are provided for efficient applications, e.g. applications having a high throughput and being very sensitive, in the areas of molecular diagnostics, e.g. clinical diagnostics and point-of-care diagnostics, advanced bio-molecular diagnostics, research-biosensors, detection of DNA, gene and protein expression arrays, cell analysis, drug screening, environmental sensors, food quality sensors, etc but also more general in high throughput light emission site detection.

It is an advantage of embodiments of the present invention that the total detection time can be significantly decreased while at the same time a large increase of the detection sensitivity can be obtained compared to single spot and imaging detection set-ups. The effective detection time per scanned area may be increased with one or two orders of magnitude, resulting in a largely improved signal to noise ratio.

It is also an advantage of the embodiments of the present invention that the relative linear scanning speed between the excitation unit and the sample is limited such that no interference occurs with the micro-fluidic infrastructure embedded in the cartridge and the speed can easily be obtained with a conventional scanning stage.

Other arrangements for accomplishing the objectives of the detection method and detection system for detecting occupied binding sides embodying the invention will be obvious for those skilled in the art.

It is to be understood that although preferred embodiments, specific constructions and configurations, as well as materials, have been discussed herein for devices according to the present invention, various changes or modifications in form and detail may be made without departing from the scope and spirit of this invention. For example, whereas the methods and systems for detecting light emission sites, e.g. occupied binding sites, are described using only one type of luminescence detection, the present invention also relates to methods and systems wherein simultaneously two types of luminescence are detected, e.g. from two different labelled target particles.

## Claims

1. A detection system (100) for detecting light emission sites in a sample (106), the detection system (100) comprising:
- an excitation unit (102) adapted for scanning a sample (106) with an excitation beam, said excitation beam forming an excitation field for scanning the sample (106), the excitation field having at least a first at least piecewise elongated excitation field component on said sample (106),
- a detection unit (104) adapted for spatially detecting a luminescence response from different locations within said at least first at least piecewise elongated excitation field component on said sample (106), and
said excitation unit (102) and said detection unit (104) using a common refractive element (110) for focussing said excitation beam on said sample (106) and for collecting said luminescence response and guide it to said detection unit (104).

2. A detection system (100) according to claim 1, further comprising means (114) for generating said excitation field having said at least a first at least piecewise elongated excitation field component, said means for generating said excitation field generating a row of excitation spots in said first at least piecewise elongated excitation field component of said excitation beam.

3. A detection system (100) according to claim 2, wherein all spots of said row of excitation spots are focused on the sample (106) using the common refractive element (110).

4. A detection system (100) according to claim 2, wherein said means for generating a row of excitation spots in said first at least piecewise elongated excitation field component of said excitation beam is any of a phase plate or a diffraction grating.

5. A detection system (100) according to claim 2, wherein said means for generating a row of excitation spots in said first at least piecewise elongated excitation field component is adapted for selecting an orientation of said row of excitation spots with respect to a scanning direction of said excitation beam.

6. A detection system (100) according to claim 1, wherein said means (114) for generating an excitation field comprising at least a first at least piecewise elongated excitation field component comprises a means for generating a line-shaped first elongated excitation field component.

7. A detection system (100) according to claim 6, wherein said means for generating a line-shaped first elongated excitation field component comprises any of a phase plate or a cylindrical lens.

8. A detection system (100) according to claim 1, wherein said detection system (100) furthermore comprises an evaluation unit (132) that is adapted for memorising locations with a specific luminescence response as candidates for an occupied binding site and to classify such a candidate as a detected occupied binding site if it shows a predetermined response behaviour in two or more scans.

9. A detection system (100) according to claim 1, wherein said means for generating an excitation field comprising at least a first at least piecewise elongated excitation field component comprises a means for generating a plurality of substantially spaced and substantially parallel at least piecewise elongated excitation field components.

10. A method (400) for detecting light emission sites in a sample (106), the method (400) comprising
- scanning a sample (106) by focussing an excitation beam having an excitation field comprising at least a first at least piecewise elongated excitation field component through a refractive element (110) on said sample (106),
- receiving through said refractive element (110) a luminescent signal from said sample (106) and detecting spatially distinctive luminescence responses from different locations in said first at least piecewise elongated excitation field component on said sample based on said received luminescent signal.

11. A method (400) for detecting according to claim 10, said first at least piecewise elongated excitation field component comprising a row of excitation spots,
wherein method (400) furthermore comprises
- prior to said scanning of a sample (106), adapting an orientation of said row of excitation spots with respect to said scanning direction to match a position of the excitation spots with a position of tracks to be scanned on the sample.

12. A method (400) for detecting according to claim 10, said method (400) furthermore comprising,
- after said detecting (402b) spatially distinctive luminescence responses,
- memorising (404) locations with a specific luminescence response as candidates for an occupied binding site,
- repeating at least once said scanning (406a), receiving, detecting (406b) and memorising (408) and
- classifying a candidate for an occupied binding site as detected occupied binding site if it shows a predetermined response behaviour in two or more scans.

13. A method (400) for detecting according to claim 10, said excitation beam comprising at least one further at least piecewise elongated excitation field component substantially parallel to and substantially spaced from said first at least piecewise elongated excitation field component,
wherein said scanning comprises focussing said excitation beam comprising said first and said at least one further at least piecewise elongated excitation field components through a refractive element (110) on said sample (106),
said method (400) furthermore comprising,
- receiving through said refractive element (110) a luminescent signal from said sample (106) and detecting spatially distinctive luminescence responses from different locations in said further at least piecewise elongated excitation field component on said sample based on said received luminescent signal.
